# EUROPÄISCHE PATENTSCHRIFT

(11) **EP 2 171 973 B1**
(45) Veröffentlichungstag und Bekanntmachung des Hinweises auf die Patenterteilung: **23.09.2015**
(21) Anmeldenummer: 08760365.0
(22) Anmeldetag: 02.06.2008
(51) Int. Cl.: H04L 29/06, H04M 3/537, H04M 3/533, H04M 7/00

(54) **VERFAHREN, ENDGERÄT UND SPRACHSPEICHER ZUM SPEICHERN VON SPRACHNACHRICHTEN IN EINEM KOMMUNIKATIONSNETZ**
METHOD, TERMINAL AND VOICE MEMORY FOR STORING VOICE MESSAGES IN A COMMUNICATION NETWORK
PROCÉDÉ, TERMINAL ET MÉMOIRE VOCALE POUR MÉMORISER DES INFORMATIONS VOCALES DANS UN RÉSEAU DE COMMUNICATION

(30) Priorität: 21.06.2007 DE 102007028640
(43) Veröffentlichungstag der Anmeldung: 07.04.2010
(73) Patentinhaber: Unify GmbH & Co. KG, 81379 München (DE)
(72) Erfinder: BOZIONEK, Bruno, 33178 Borchen (DE); KLAGHOFER, Karl, 81373 München (DE); PRANGE, Holger, 81373 München (DE); TIETSCH, Michael, 86916 Kaufering (DE)
(74) Vertreter: Fritzsche, Thomas
(86) Internationale Anmeldenummer: PCT/EP2008/056779
(87) Internationale Veröffentlichungsnummer: WO 2008/155210

(56) Entgegenhaltungen:
- EP-A- 1 635 551
- WO-A-2005/018211
- US-A1- 2004 247 097
- US-A1- 2005 245 239
- US-A1- 2005 286 519
- FENG CAO ET AL: "Providing Secure Services in Peer-to-Peer Communications Networks with Central Security Servers" TELECOMMUNICATIONS, 2005. AICT-ICIW '06. INTERNATIONAL CONFERENCE ON I NTERNET AND WEB APPLICATIONS AND SERVICES/ADVANCED INTERNATIONAL CONFE RENCE ON GUADELOPE, FRENCH CARIBBEAN 19-25 FEB. 2006, PISCATAWAY, NJ, USA,IEEE, 19. Februar 2006 (2006-02-19), Seiten 1-6, XP010898428 ISBN: 978-0-7695-2522-8
- KUNDAN SINGH ET AL: "Peer-to-Peer Internet Telephony using SIP" INTERNET CITATION, [Online] 2005, Seiten 1-19, XP002457220 Gefunden im Internet: URL:http://www1.cs.columbia.edu/ library/TR-repository/reports/reports-20 04/cucs-044-04.pdf> [gefunden am 2007-10-31]

## Beschreibung

In Kommunikationsnetzen, beispielsweise im PSTN oder im paketorientierten Intranet oder Internet, kann einem Endgerät ein Sprachspeicher fest zugeordnet werden. Dieser wird genutzt, um bei einer Nichterreichbarkeit des Endgeräts bzw. dessen zugeordneten Teilnehmern trotzdem eine Sprachnachricht zu hinterlassen. Hierbei wird der Sprachspeicher - auch als Anrufbeantworter bezeichnet - durch die Teilnehmer in Bereitschaft geschaltet. Bei einem in Bereitschaft gebrachten, einem Endgerät zugeordneten Sprachspeicher wird bei einem Anruf an dieses Endgerät sofort oder nach einigen Rufsignalisierungen der Sprachspeicher aktiviert bzw. der Anrufbeantworter anstelle des Teilnehmers eingeschaltet. Der Sprachspeicher wird nach einer Ansage an das rufende Endgerät in einen Zustand gesteuert, bei dem er Sprachnachrichten vom rufenden Endgerät empfangen und speichern kann. Ein derartiger Sprachspeicher kann sowohl im Endgerät als auch im Kommunikationsnetz angeordnet sein, wobei der Sprachspeicher dem jeweiligen Endgerät zugeordnet ist.

Ist einem gerufenen Endgerät kein Sprachspeicher zugeordnet, kann bei einer Nichterreichbarkeit des gerufenen Teilnehmers aktuell keine Sprachnachricht an das gerufene Endgerät übermittelt werden. Um den gerufenen Teilnehmer über den Verbindungswunsch bzw. einen gewünschten Sprachinformationsaustausch zu informieren, kann, sofern im Kommunikationsnetz möglich, ein Leistungsmerkmal "automatischer Rückruf" oder "Message Waiting Callback" aktiviert werden. Bei beiden Leistungsmerkmalen wird nach einer Verfügbarkeit des gerufenen Teilnehmers an seinem Endgerät entweder automatisch ein Rückruf zum rufenden Endgerät eingeleitet, sofern der gerufene Teilnehmer an seinem Endgerät aktiv wird oder es wird ihm eine Information angezeigt, dass es den rufenden Teilnehmer zurückrufen soll. Ein Rückruf gemäß den beiden Leistungs-merkmalen kann jedoch wiederum scheitern, sofern der Teilnehmer des ursprünglich rufenden Endgeräts nicht verfügbar bzw. nicht erreichbar ist. Eine aktuelle Übermittlung einer Sprachnachricht an den gerufenen Teilnehmer kann mit den beiden Leistungsmerkmalen nicht erreicht werden. WO 2005/018211 A1 offenbart beispielsweise ein Telefonsystem mit Voice over IP (VoIP) zur Sprachnachrichtenspeicherung, das keine zentrale Server dafür benötigt.

Die der Erfindung zugrunde liegende Aufgabe besteht darin, die Übermittlung von Sprachnachrichten an Endgeräte zu verbessern. Die Aufgabe wird durch das Verfahren zum Speichern von Sprachnachrichten in einem Kommunikationsnetz nach Anspruch 1, durch die Verwendung eines entsprechend ausgebildeten Endgerätes nach Anspruch 11, durch die Verwendung eines entsprechend ausgebildeten Sprachspeichers nach Anspruch 12 und durch ein Kommunikationsnetz nach Anspruch 9 gelöst.

Der wesentliche Aspekt des erfindungsgemäßen Verfahrens ist darin zu sehen, dass nach einer Eingabe des Teilnehmers eines ersten Endgeräts von diesem zu einem temporär verfügbaren Sprachspeicher im Kommunikationsnetz eine Verbindung signalisiert und eine Sprachnachricht und zumindest eine ein zweites Endgerät identifizierende Abrufinformation übermittelt und dort gespeichert wird sowie anschließend die Verbindung beendet wird. Das zweite Endgerät wird durch den Sprachspeicher mit Hilfe der zumindest einen Abrufinformation über das Vorliegen einer abrufbaren Sprachnachricht im Sprachspeicher informiert und die Sprachnachricht ist von dem zweiten Endgerät mit Hilfe der übermittelten Abrufinformation abrufbar oder wird vom Sprachspeicher an das zweite Endgerät übermittelt.

Ein wesentlicher Vorteil der Erfindung ist darin zu sehen, dass eine Sprachnachricht für einen gerufenen Teilnehmer in einem temporär verfügbaren Sprachspeicher gespeichert und eine Information über die Speicherung an den gerufenen Teil-nehmer übermittelt werden kann, unabhängig davon, ob diesem ein oder kein Sprachspeicher zugeordnet ist. Auch kann die Sprachnachricht von dem gerufenen Teilnehmer abgerufen werden oder die Sprachnachricht wird durch den Sprachspeicher an den gerufenen Teilnehmer übermittelt. Durch diese dynamische temporäre Bereitstellung eines beliebigen, jedoch adressierbaren Sprachspeichers im Kommunikationsnetz wird eine sehr flexible und wirtschaftliche Realisierung eines Sprachspeichers erreicht, der in jedem vermittlungstechnischen Zustand des Endgeräts erreicht werden kann und keine wiederholten Verbindungsversuche erfordert.

Nach einer vorteilhaften Weiterbildung des erfindungsgemäßen Verfahrens wird im Rahmen einer Verbindungssignalisierung von einem ersten Endgerät zu einem zweiten Endgerät durch das erste und/oder zweite Endgerät und/oder durch das Kommunikationsnetz festgestellt, dass dem zweiten Endgerät kein Sprachspeicher zugeordnet ist, und anschließend wird entweder durch eine Eingabe des Teilnehmers oder automatisch eine Verbindung zu dem temporär verfügbaren Sprachspeicher signalisiert. Hierdurch wird nur dann eine Verbindung zu dem temporär verfügbaren Sprachspeicher signalisiert, nachdem festgestellt ist, dass dem zweiten Endgerät kein Sprachspeicher zugeordnet ist.

Gemäß einer weiteren vorteilhaften Ausgestaltung der Erfindung wird das zweite Endgerät über das Kommunikationsnetz oder der dem zweiten Endgerät zugeordnete Teilnehmer über das Vorliegen einer abrufbaren Sprachnachricht über andere Kommunikationsnetze informiert. Dies kann über ein paketorientiertes Netz durch eine E-Mail-Nachricht oder eine Message-Waiting-Nachricht, oder über ein Funkkommunikationsnetz durch eine SMS-Nachricht erfolgen, wobei der Sprachspeicher für den Zugang in paketorientierte Netze, zeitschlitzorientierte und Funk-Kommunikationsnetze ausgestaltet ist. Die Abrufinformation ist vorteilhaft bei einem zeitschlitzorientierten Kommunikationsnetz durch eine Rufnummer, bei einem paketorientierten Kommunikationsnetz durch eine Kommunikationsnetzadresse wie Internetadresse oder E-Mail-Adresse, oder bei einem Mobilfunk-Kommunikationsnetz durch eine Mobilfunk-Rufnummer repräsentiert. Die Abrufinformation kann vorteilhaft auch eine Authentisierungsinformation enthalten, die für eine Authentisierungsprozedur beim Abrufen der Sprachnachricht verwendet werden. Das Informieren des zweiten Endgeräts bzw. dessen Teilnehmers kann daher sehr flexibel, d. h. über unterschiedliche Kommunikationsnetze und deren Endgeräte erfolgen, wobei Teilnehmer häufig über Festnetzendgeräte über TDM-Netze oder das Internet bzw. Intranet sowie mobile Endgeräte über Funknetze erreichbar sind.

Nach einer weiteren vorteilhaften Ausgestaltung der Erfindung wird bei der Signalisierung der Verbindung durch das erste Endgerät der temporär nutzbare Sprachspeicher aus einem Sprachspeicherpool ausgewählt oder bei der Signalisierung der Verbindung wird durch das erste Endgerät der Sprachspeicher des ersten Endgeräts für eine temporäre Nutzung ausgewählt, wobei der Sprachspeicher des ersten Endgeräts derart ausgestaltet ist, dass mit Hilfe der übermittelten Endgeräteidentifikation das zweite Endgerät über das Vorliegen einer gespeicherten Sprachnachricht informiert werden kann und/oder die gespeicherte Sprachnachricht an das zweite Endgerät übermittelt werden kann. Dies bedeutet, dass erfindungsgemäß in dem Kommunikationsnetz ein Pool von Sprachspeichern bzw. ein Sprachspeicher mit einem größeren Ressourcenumfang oder auch der Sprachspeicher des ersten Endgeräts - falls vorhanden - vorgesehen ist, der temporär für die Zwischenspeicherung einer Sprachnachricht benutzt wird und nach der Übermittlung der Sprachnachricht an das zweite Endgerät wieder freigegeben wird und für andere Endgeräte bzw. deren Teilnehmer für eine Zwischenspeicherung einer Sprachnachricht verfügbar ist.

Vorteilhaft kann durch das erste Endgerät die Signalisierung der Verbindung zum temporär nutzbaren Sprachspeicher im Rufzustand mit dem zweiten Endgerät, oder im Rufzustand mit dem zweiten Endgerät mit einem Hinweis, dass dem zweiten Endgerät kein Sprachspeicher zugeordnet ist, oder im Besetztzustand des zweiten Endgeräts, oder im Gesprächszustand oder im verbindungslosen Zustand mit dem zweiten Endgerät eingeleitet werden. In allen Varianten wird schließlich die Verbindungssignalisierung vom ersten zum zweiten Endgerät beendet und ein Verbindungsaufbau zum Sprachspeicher im Kommunikationsnetz oder im eigenen Endgerät eingeleitet.

Nach einer weiteren Ausgestaltung der Erfindung wird an das zweite Endgerät oder an den dem zweiten Endgerät zugeordneten Teilnehmer im Rahmen der Information über das Vorliegen einer abrufbaren Sprachnachricht eine Abrufinformation übermittelt, wobei in der Abrufinformation eine netzspezifische Adresse und/oder eine Rufnummer sowie eine nachrichtenspezifische Identifikation für einen Abruf der gespeicherten Sprachinformation aus dem Sprachspeicher über ein Kommunikationsnetz angegeben ist. Die Adresse kann wiederum durch eine Rufnummer eines TDM-orientierten Kommunikationsnetzes wie Mobilfunknetz oder drahtgebundenes Telefonnetz oder eine Internet- bzw. Intranet-Adresse des Internet bzw. Intranet sein, in denen ein Protokoll für eine Sprachübertragung realisiert ist.

Weitere vorteilhafte Weiterbildungen des erfindungsgemäßen Verfahrens und eine Ausgestaltung eines erfindungsgemäßen Endgeräts, eines Sprachspeichers und eines Kommunikationssystems sind den weiteren Ansprüchen zu entnehmen.

Im Folgenden werden die Erfindung und deren Weiterbildungen anhand zweier zeichnerischen Darstellungen näher erläutert. Dabei zeigen
- Figur 1: eine schematische Darstellung eines Kommunikationssystems zur Realisierung des erfindungsgemäßen Verfahrens und
- Figur 2a bis 2d: Ablaufdiagramme zur Erläuterung des erfindungsgemäßen Verfahrens, basierend auf dem Kommunikationssystem in Figur 1.

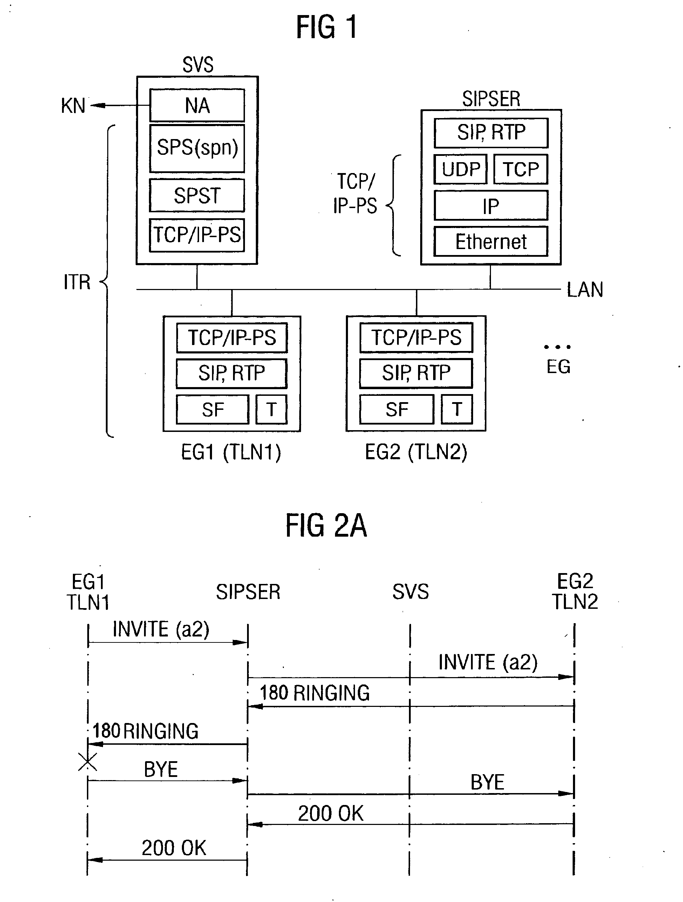

Figur 1 zeigt ein Kommunikationssystem mit einem Kommunikationsnetz, das beispielsweise durch eine Intranet ITR realisiert ist. Andere Kommunikationsnetze wie das Internet oder zeitmultiplexorientierte Netze sind ebenfalls möglich. Das Intranet ITR ist durch ein lokales Netzwerk LAN bzw. durch ein Ethernet gebildet, an das mehrere Endgeräte EG - durch eine gepunktete Linie dargestellt - sowie zwei Server SVS, SIPSER angeschlossen sind. Beispielhaft sind zwei Endgeräte EG1, EG2 dargestellt, die durch ein Telefon mit Ethernetanschluss oder durch einen Personalcomputer mit Ethernetanschluss und Sprachfunktion SF realisiert sein können.

Für die Sprachfunktion SF im Intranet ITR ist in der Applikationsschicht das SIP-Protokoll SIP (Session Initial Protocol) gemäß dem RFC Standard RFC3261 sowie SIP Extension RFCs, z.B. RFC3265, welche den SIP Standard um die verwendeten SIP NOTIFY Methoden ergänzen, vorgesehen, wobei das SIP-Protokoll die Signalisierung einer Sprachverbindung steuert - in Figur 1 beispielhaft im SIP-Server SIPSER angedeutet. Die Übertragung der Sprachinformation über das lokale Netzwerk wird vorzugsweise mit dem RTP-Protokoll (Realtime Transport Protocol) oder optional mit dem SRTP-Protokoll (Secure Realtime Transport Protocol) abgewickelt, wobei diese Protokolle üblicherweise für die direkte Übertragung der Sprachnachrichten, d.h. ohne Einbeziehung des SIP-Servers SIPSER, zwischen den Endgeräten EG verwendet werden. Hierbei wird vorausgesetzt, dass keine anderen Netzwerkelemente wie z.B. Media Proxies oder Session Border Controller den RTP Strom weiterleiten. Für die Übermittlung der Sprachnachrichten und der Signalisierungsinformation über das lokale Netzwerk LAN sind noch weitere Protokollschichten erforderlich, die zusammengefasst in einem TCP/IP-Protokollstapel TCP/IP-PS darstellt sind. Dies ist insbesondere das UDP- Protokoll UDP (User Data Protocol) und das TCP-Protokoll TCP (Transmission Control Protocol) in der Transportschicht sowie das Internetprotokoll IP (IP4 oder IP6) in der Internetschicht. In der folgenden Netzwerkschicht wird mit Hilfe des Ethernetprotokolls Ethernet die Internetschicht prozedural und physikalisch an das lokale Netzwerk LAN angepasst. Diese vorhergehend beschriebenen Protokollschichten und physikalischen Anpassungen an das Netzwerk sind nicht nur im SIP-Server SIPSER, sondern auch in den Endgeräten EG und in einem Speicherserver SVS realisiert - in Figur 1 durch die Bezeichnung TCP/IP-PS angedeutet, wobei im SIP-Server SIPSER die Verbindungssignalisierung bzw. der Aufbau einer virtuellen Verbindung zwischen dem ersten und dem zweiten Endgerät EG1, EG2 gesteuert wird.

In den Endgeräten EG ist zusätzlich zum TCP/IP-Protokollstapel TCP/IP-PS die Sprachfunktion SF vorgesehen, wobei die Sprachinformation durch ein Mikrofon und einen Lautsprecher-nicht dargestellt - und durch entsprechende physikalische Anpassungen und Anpassungsfunktion an das SIP- Protokoll SIP sowie an das RTP bzw. SRTP-Protokoll realisiert ist.

Im Speicherserver SVS ist zusätzlich zum Protokollstapel TCP/IP-PS eine Sprachspeichersteuerung SPST, ein Sprachspeicher SPS sowie optional eine Netzanpassungseinheit NA vorgesehen. Mit Hilfe der Sprachspeichersteuerung SPST werden mit Hilfe des SIP-Protokolls übermittelte Sprachnachrichten spn als RTP-Datenstrom (bzw. SRTP) an den Sprachspeicher SPS gesteuert und dort gespeichert sowie aus dem Sprachspeicher SPS gelesene Sprachnachrichten spn als RTP (bzw. SRTP) Datenstrom an das jeweilige Endgerät (d.h. EG2) geführt.

Der Sprachspeicher SPS ist durch einen Pool von einen vorgegebenen Speicherumfang aufweisenden Teilsprachspeichern - nicht dargestellt - gebildet, wobei einer zu speichernden Sprachnachricht spn in Abhängigkeit von dem Umfang der Sprachnachricht spn eine passende Anzahl von Teilsprachspeichern zugeordnet wird. Alternativ kann der Sprachspeicher SPS durch einen Sprachspeicher mit einem großen Speicherumfang realisiert werden, wobei einer zu speichernden Sprachnachricht spn jeweils der erforderliche Teilspeicherumfang aus dem Sprachspeicher SPS zugeordnet wird.

Des Weiteren ist in dem Sprachspeicher SPS eine Netzanpassungseinheit NA vorgesehen, in der unterschiedliche Netzzugänge realisiert sein können wie beispielsweise ein Netzzugang zu einem Mobilfunknetz oder Telefonnetz. Hierbei ist sowohl eine Protokollanpassung als auch eine Anpassung der physikalischen Eigenschaften an die Kommunikationsnetze vorzusehen - beispielsweise eine geeignete Funkeinheit für den Zugang zu einem Funkkommunikationsnetz.

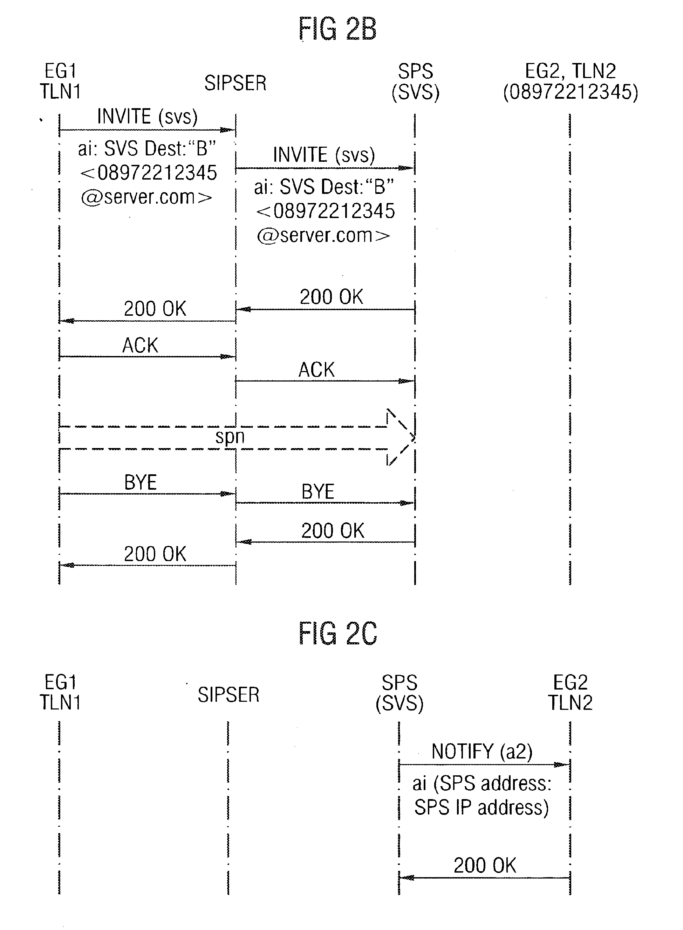

In den Figuren 2a bis 2d wird anhand eines unterteilten Ablaufdiagramms das erfindungsgemäße Verfahren erläutert, wobei ein nach Figur 1 ausgestaltetes Kommunikationssystem vorausgesetzt wird. Das erste und zweite Endgerät EG1, EG2, der SIP-Server SIPSER und der Speicherserver SVS sind in den Ablaufdiagrammen jeweils durch eine senkrechte, strich-punktierte Linie repräsentiert. Des Weiteren sei für das Ausführungsbeispiel angenommen, dass das erste Endgerät EG1 zum zweiten Endgerät EG2 eine Verbindungssignalisierung zum Zwecke einer Sprachverbindung einleitet.

Im Rahmen der Verbindungssignalisierung wird vom ersten Endgerät EG1 gemäß dem SIP-Protokoll SIP eine Invite-Meldung INVITE an den SIP-Server SIPSER übermittelt, wobei in die Invite-Meldung INVITE die Adresse a2 des zweiten Endgeräts EG2 eingefügt ist. Die Adresse a2 wird bei Verwendung des SIP-Protokolls vorzugsweise als SIP-URI wie beispielsweise "sip:+49811234567@domain" angegeben. Eine SIP-URI dient der Adressierung von Teilnehmern SIP-basierter Gespräche. Es handelt sich hierbei um die SIP-Telefonnummer eines Teilnehmers, die die von E-Mail-Adressen her bekannte Notation verwendet. Alternativ kann die Adresse im URI-Format, "sip:user@domain" oder als Telefon-URI wie beispielsweise "tel:+49811234567" angegeben werden, wobei die Adresse in eine SIP-URI gewandelt werden kann.

Ein SIP-Server SIPSER ist der Hauptbestandteil eines IPbasierten Netzes bzw. des Intranets ITR für Sprachübertragung, wobei im SIP-Server SIPSER alle SIP-Anrufe für das Netzwerk vorbereitet werden. Ein SIP-Server steuert die Vermittlung der Anrufe von den Endgeräten EG zu anderen Endgeräten oder zu weiteren Servern oder zu Netzübergangseinrichtungen - nicht dargestellt. Bezogen auf das Ausführungsbeispiel wird im SIP-Server SIPSER eine Invite-Meldung INVITE mit der Adresse a2 des zweiten Endgeräts EG2 gebildet und an das lokale Netzwerk LAN übermittelt. Das zweite Endgerät EG2 erkennt, dass die Invite-Meldung INVITE an sie adressiert ist und bildet daraufhin Ringingsignale bzw. Rufsignale, die am zweiten Endgerät EG2 ausgegeben werden. Bei der Bildung der Ringingsignale wird mit Hilfe des SIP-Protokolls gemäß eine Ringing-Meldung 180 Ringing erstellt und über den SIP-Server SIPSER an das erste Endgerät EG1 übertragen.

Für das Ausführungsbeispiel sei weiterhin angenommen, dass der Teilnehmer TLN2 des zweiten Endgeräts EG2 nicht verfügbar ist und folglich wird der Anruf des ersten Endgeräts EG1 nicht angenommen. Zusätzlich könnte vom SIP-Server SIPSER oder vom zweiten Endgerät EG2 eine Information gebildet werden, dass dem zweiten Endgerät EG2 kein Sprachspeicher zugeordnet ist und diese Information an das erste Endgerät EG1 übermittelt wird. Da keine übliche Möglichkeit besteht, dem zweiten Endgerät EG2 eine Sprachnachricht spn zukommen zu lassen, wird erfindungsgemäß eine Verbindungssignalisierung zu dem Speicherserver SVS mit der Adresse des Sprachspeichers SPS eingeleitet. Die Einleitung erfolgt beispielsweise durch Drücken einer speziellen, am ersten Endgerät EG1 angeordneten Sprachspeichertaste T, die durch eine mechanische oder elektronische Taste oder durch eine Touchscreen-Taste realisiert sein kann. Alternativ kann auch durch die Anwahl eines Menü-Eintrages über vorhandene Telefon-Tasten die Verbindungssignalisierung eingeleitet werden. Die Einleitung der Verbindungssignalisierung zu dem Speicherserver SVS kann auch automatisch erfolgen, d.h. nachdem festgestellt ist, dass dem zweiten Endgerät EG2 kein Sprachspeicher zugeordnet ist, kann das erste Endgerät EG1 ohne eine Eingabe des ersten Teilnehmers - beispielsweise das Drücken einer speziellen Taste "T" - die Verbindungssignalisierung zu dem Speicherserver SVS automatisch einleiten.

Für die folgenden Beschreibungen wird vorausgesetzt, dass das Offer-Answer Model von SIP und SDP nach RFC3264 und anderen RFCs berücksichtigt wird, wobei in dieses Offer-Answer Model das Aushandeln der Parameter für die Übermittlung des Sprachstromes umfasst.

Nach Auswahl der Sprachspeicherfunktion - beispielsweise durch Betätigen der Sprachspeichertaste T - wird das Beenden der Verbindungssignalisierung zum zweiten Endgerät EG2 durch Bilden und Übermitteln einer SIP-konformen BYE-Meldung BYE eingeleitet. Im ersten Endgerät EG1 wird daraufhin eine entsprechende BYE-Meldung BYE gebildet und diese wird üblicherweise über den SIP-Server SIPSER an das zweite Endgerät EG2 weitergeleitet. SIP-konform wird die BYE-Meldung BYE durch eine an den SIP-Server SIPSER übermittelte 200 OK-Meldung 200 OK durch das zweite Endgerät EG2 bestätigt und nach der Übermittlung einer an das erste Endgerät EG1 übermittelten 200 OK-Meldung 200 OK wird die Verbindungssignalisierung in den beteiligten Endgeräten EG1,EG2 und im SIP-Server SIPSER beendet.

Die Auswahl der Sprachspeicherfunktion bzw. das Betätigen der Sprachspeichertaste T könnte auch nach dem SIP-konformen Beenden der Verbindungssignalisierung erfolgen, wobei in diesem Falle die Adresse a2 des zweiten Endgeräts für den weiteren Ablauf des erfindungsgemäßen Verfahrens verfügbar sein muss. Die Auswahl der Sprachspeicherfunktion könnte auch ohne eine Verbindungssignalisierung von dem ersten zum zweiten Endgerät EG1, EG2 erfolgen. Diese Vorgehensweise ist vorteilhaft, wenn eine Sprachnachricht spn im temporär verfügbaren Speicherserver SVS gespeichert werden soll, unabhängig davon, ob dem zweiten Endgerät EG2 bzw. das gerufene Endgerät ein oder kein Sprachspeicher zugeordnet ist oder dem ersten Teilnehmer TLN1 bekannt ist, dass dem zweiten Endgerät EG2 kein Sprachspeicher zugeordnet ist.

Nach der Auswahl der Sprachspeicherfunktion wird die Verbindungssignalisierung zum Speicherserver SVS eingeleitet - siehe hierzu Figur 2b. Hierbei wird gemäß dem SIP-Protokoll SIP eine Invite-Meldung INVITE an den SIP-Server SIPSER übermittelt, wobei in die Invite-Meldung INVITE die Adresse svs des Speicherservers SVS als Adressierungselement (d.h. als Request URI) eingefügt ist. Des Weiteren ist eine Abrufinformation ai, für das Ausführungsbeispiel sei eine Abrufinformation ai: SVS_Dest:"EG2" <08972212345@Server.com> angenommen, in die Invite-Meldung INVITE eingefügt. Durch das Adressierungselement und durch diese Abrufinformation ai wird dem SIP-Server SIPSER angezeigt, dass die Verbindungssignalisierung zum Speicherserver SVS mit der angegebenen Adresse svs und der Abrufinformation ai weitervermittelt werden soll. Hierzu wird im SIP-Server SIPSER wiederum eine Invite-Meldung INVITE mit der gleichen Adresse svs des Speicherservers SVS gebildet und in das lokale Netz LAN übertragen. Aufgrund der angegebenen Adresse svs erkennt der Speicherserver SVS, dass die Verbindungssignalisierung für ihn bestimmt ist. Im Speicherserver SVS wird die Verbindungssignalisierung bzw. der Anruf angenommen und daraufhin eine 200 OK-Meldung 200 OK gebildet sowie durch eine Übermittlung an den SIP-Server SIPSER die Annahme des Anrufs mitgeteilt. Die 200 OK-Meldung 200 OK wird vom SIP-Server SIPSER über das lokale Netz LAN an das erste Endgerät EG1 weitergeleitet. Im ersten Endgerät EG1 wird daraufhin eine SIP-konforme Ack-Meldung ACK gebildet und durch eine Übermittlung der Ack-Meldung ACK über das lokale Netz LAN und über den SIP-Server SIPSER wird die Annahme des Anrufs bestätigt. Durch die angegebene Abrufinformation ai ist dem Speicherserver SVS angezeigt, dass eine vom ersten Endgerät EG1 übermittelte Sprachnachricht spn im Sprachspeicher SPS für den zweiten Teilnehmer TLN2 des zweiten Endgeräts EG2 gespeichert werden soll.

Nachdem die Verbindung - beim SIP-Protokoll eine Session - mit Hilfe des SIP-Server SIPSER vom ersten Endgerät EG1 zum Speicherserver SVS signalisiert ist, wird eine vom ersten Teilnehmer TLN1 des ersten Endgerät EG1 eingegebene bzw. eingesprochene Sprachnachricht spn über das lokale Netz LAN an den Speicherserver SVS übermittelt. Im Speicherserver SVS wird über den TCP/IP-Protokollstapel TCP/IP-PS mit Hilfe der Sprachspeichersteuerung SPST und dem RTP-Protokoll die Sprachnachricht spn an den Sprachspeicher SPS gesteuert. Die Sprachspeichersteuerung SPST steuert hierbei die Bereitstellung der Teilspeicher oder alternativ den bereitzustellenden Speicherumfang für die übermittelte Sprachnachricht spn. Die Übertragung der Sprachnachricht spn wird SIP-konform mit dem RTP (Realtime Transmission Protocol) oder auch SRTP durchgeführt, d.h. die Sprachnachricht spn wird direkt vom ersten Endgerät EG1 an den Speicherserver SVS in den Sprachspeicher SPS übertragen. Alternativ können auch Media Proxys oder Session Border Controller in die Übertragung eingefügt sein, wobei die Sprachnachricht nicht direkt, sondern über diese Einheiten übertragen wird.

Nach der Übermittlung der Sprachnachricht spn wird das Beenden der Verbindung bzw. Session dadurch eingeleitet, dass eine SIP-konforme BYE-Meldung BYE im ersten Endgerät EG1 gebildet und über den SIP-Server SIPSER an den Speicherserver SVS übermittelt wird. SIP-konform wird die BYE-Meldung BYE durch eine über den SIP-Server SIPSER an das erste Endgerät EG1 übermittelte 200 OK-Meldung 200 OK bestätigt, wodurch die Verbindung im ersten Endgerät EG1 sowie im SIP-Server SIPSER und Speicherserver SVS beendet wird.

Nach dem Beenden der Verbindung zwischen dem ersten Endgerät EG1 und dem Speicherserver SVS wird erfindungsgemäß das zweite Endgerät EG2 über das Vorliegen einer im Sprachserver SPS gespeicherten Sprachnachricht spn informiert. Hierzu wird SIP-konform eine Notify-Meldung NOTIFY im Speicherserver SVS gebildet und über das lokale Netzwerk LAN und möglicherweise über den SIP-Server SIPSER an das zweite Endgerät EG2 übertragen. Alternativ kann eine andere bzw. neue SIP-Meldung verwendet werden, z.B. PUBLISH oder INFO oder auch z.B. SIGNAL, wobei die Meldung im Speicherserver SVS gebildet wird.

In die Notify-Meldung NOTIFY ist neben der Adresse a2 des zweiten Endgeräts EG2 als Adressierungselement (d.h. die Request URI) auch die Adresse svs (SVS address: SVS IP address) oder Domain Name eingefügt, die die IP-Adresse des Sprachservers SVS öder auch den Domain Name des Speicherservers SVS anzeigt, in dem eine Sprachnachricht spn für das zweite Endgerät EG2 vorliegt bzw. gespeichert ist und abgerufen werden kann. Anschließend wird SIP-konform die Notify-Meldung NOTIFY durch eine an den Speicherserver SVS übermittelte 200 OK-Meldung 200 OK bestätigt. Das Endgerät EG2 kann nunmehr eine Message Waiting Indication Lampe einschalten oder über das Display oder über einen in den Sprachstrom eingebetteten Hinweiston oder Sprachnachricht dem Teilnehmer TLN2 signalisieren, dass eine Sprachnachricht spn vorliegt. Eine weitere Möglichkeit wäre, dem Teilnehmer TLN2 mitzuteilen, wie viele Nachrichten vorliegen, die Rufnummer oder auch der Name der Teilnehmer, die Sprachnachrichten spn hinterlassen haben.

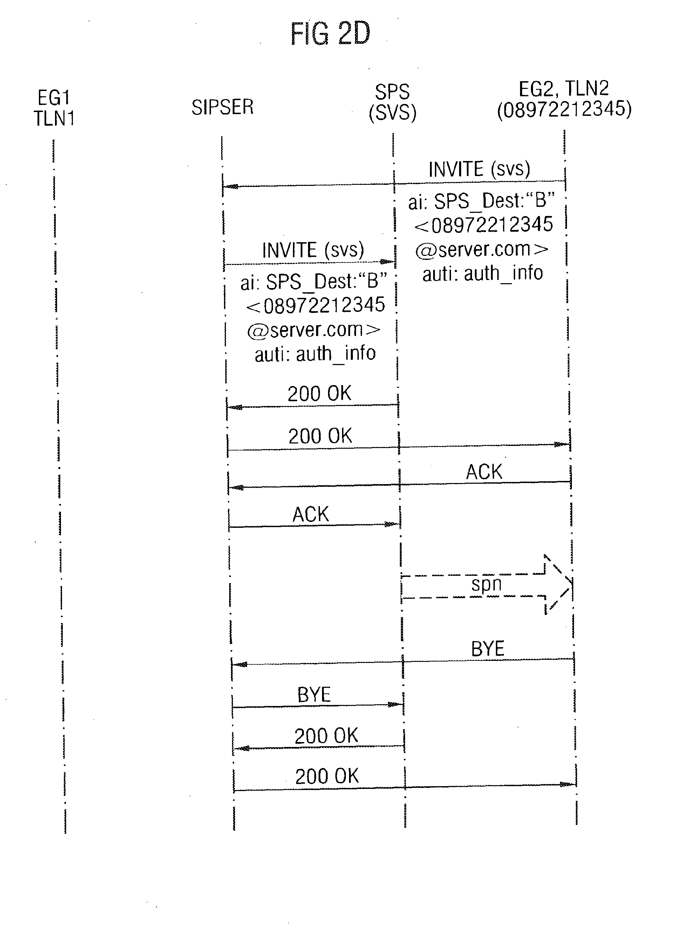

In dem in Figur 2d angegebenen Ablaufdiagramm ist in einem Ausführungsbeispiel der Erfindung das Abfragen bzw. Übermitteln der Sprachnachricht spn vom Speicherserver SVS durch das zweite Endgerät EG2 dargestellt.

Vom zweiten Endgerät EG2 wird bei einer Verfügbarkeit bzw. Anwesenheit des zweiten Teilnehmers TLN2 durch diesen eine Verbindungssignalisierung zum Speicherserver SVS eingeleitet - siehe hierzu Figur 2d. Hierbei wird gemäß dem SIP-Protokoll SIP eine Invite-Meldung INVITE an den Speicherserver SVS übermittelt - evtl. auch über den SIP-Server SIPSER -, wobei in die Invite-Meldung INVITE die übermittelte Adresse svs des Speicherservers SVS als Adressierungselement - d.h. als Request URI - eingefügt ist. Weiterhin ist der Invite-Meldung INVITE eine Abrufinformation ai = SVS_Dest:"B" 08972212345@server.com enthalten, mit der die Sprachnachricht spn aus dem Sprachspeicher SPS nur durch das richtige Endgerät, d.h. das zweite Endgerät EG2 abrufen werden kann. Im Speicherserver SVS wird die Verbindungssignalisierung bzw. der Anruf angenommen und daraufhin eine 200 OK-Meldung 200 OK gebildet und durch eine Übermittlung an das zweite Endgerät EG2 die Annahme des Anrufs mitgeteilt. Im zweiten Endgerät EG2 wird daraufhin eine SIP-konforme Ack-Meldung ACK erzeugt und durch eine Übermittlung der Ack-Meldung ACK über das lokale Netz LAN und den SIP-Server SIPSER wird die Annahme des Anrufs bestätigt.

Um sicherzustellen, dass das richtige Endgerät EG2 autorisiert ist, die gespeicherte Sprachnachricht spn abzurufen, kann zusätzlich eine Authentisierungsprozedur AUT mit einer das zweite Endgerät EG2 eindeutig identifizierenden bzw. geeigneten Authentisierungsinformation auti durchgeführt werden - in der Figur 2d durch die Bezeichnung AUT (auti) angedeutet.

Nachdem die Verbindung bzw. die Session vom zweiten Endgerät EG2 zum Speicherserver SVS aufgebaut ist, wird im Speicherserver SVS mit Hilfe der übermittelten Abrufinformation ai und der Sprachspeichersteuerung SPST die Sprachnachricht spn im Sprachspeicher SPS ermittelt, ausgelesen und über den TCP/IP-Protokollstapel TCP/IP-PS und das lokale Netz LAN an das zweite Endgerät EG2 übermittelt - in der Figur 2d durch einen mit spn bezeichneten Pfeil angedeutet. Die Übertragung der Sprachnachricht spn wird SIP-konform mit dem RTP (Realtime Transmission Protocol) oder SRTP-Protokoll durchgeführt, wobei die hierfür erforderlichen Portadressen durch das SIP-Protokoll - einschließlich der SIP Extension Protokolle wie z.B. RFC3264 - Offer/Answer Handling bzw. das SDP-Protokoll - ermittelt werden.

Nach der Übermittlung der Sprachnachricht spn wird das Beenden der Verbindung dadurch eingeleitet, dass eine SIP-konforme BYE-Meldung BYE im zweiten Endgerät EG2 gebildet und an den Speicherserver SVS - gegebenenfalls über den SIP-Server SIPSER - übermittelt wird. SIP-konform wird die BYE-Meldung BYE durch eine über den Speicherserver SVS an das zweite Endgerät EG2 übermittelte 200 OK-Meldung 200 OK bestätigt, wodurch die Verbindung in dem zweiten Endgerät EG2 und im Speicherserver SVS beendet wird.

Alternativ kann die Sprachnachricht spn auch durch einen vom Speicherserver SVS eingeleiteten Verbindungsaufbau an das zweite Endgerät EG2 übermittelt werden, wobei die Invite-Meldung INVITE an den SIP-Server SIPSER gesendet wird. Der SIP-Server SIPSER leitet anschließend diese Meldung an das zweite Endgerät EG2 weiter. Auch kann die Übertragung der Sprachnachricht spn vom Speicherserver SVS über andere Kommunikationsnetze wie beispielsweise über eine Mobilfunknetz an mobile Endgeräte übertragen werden. Hierbei wird vorteilhaft eine in dem Speicherserver SVS vorgesehene Netzanpassungseinrichtung NA benutzt, mit deren Hilfe ein Zugriff auf andere Kommunikationsnetze realisiert ist - in der Figur 1 durch ein mit NA bezeichnetes Rechteck und durch einem mit KN bezeichneten Pfeil angedeutet.

Gemäß einer weiteren Alternative kann die Sprachnachricht spn in eine Textnachricht - beispielsweise E-mail - gewandelt werden und an ein Endgerät des zweiten Teilnehmers TLN2 übermittelt werden, das nur für Textempfang geeignet ist - in den Figuren nicht dargestellt. Beispielsweise ist dies ein als Personalcomputer realisiertes Endgerät ohne Telefonfunktion, das jedoch über das Internet oder Intranet ITR E-mails empfangen kann.

Gemäß einer vorteilhaften Weiterbildung kann der Teilnehmer TLN2 des zweiten Endgeräts EG2 über das Vorliegen einer Sprachnachricht spn im Speicherserver SVS auch über andere Kommunikationsnetze informiert werden. Hierzu ist wiederum die Netzanpassungseinheit NA derart auszugestalten, dass die Abrufinformation ai beispielsweise über ein Funkkommunikationsnetz - z.B. GSM,WLAN,UMTS - zu einem mobilen Endgerät des zweiten Teilnehmers TLN2 oder über ein drahtgebundenes Telefonnetz - insbesondere digitales Telefonnetz - an ein weiteres Endgerät des zweiten Teilnehmers TLN2 übermittelt werden kann - nicht dargestellt.

Gemäß einer weiteren Alternative der Erfindung kann als temporär verfügbarer Sprachspeicher SPS auch ein Sprachspeicher verwendet werden, der bereits im ersten Endgerät EG1 vorhanden bzw. diesem zugeordnet ist. Der Sprachspeicher des ersten Endgeräts EG1 ist hierbei derart auszugestalten, dass in ihm Sprachnachrichten spn für andere Endgeräte EG gespeichert werden können und der Sprachspeicher entsprechend der Erfindung das jeweils andere Endgerät EG, beispielsweise das zweite Endgerät EG2, über das Vorliegen einer in diesem Endgerät EG gespeicherten Sprachnachricht über das Intranet ITR oder andere Kommunikationsnetze KN informieren kann. Zusätzlich ist der Sprachspeicher des ersten Endgeräts EG1 bzw. das erste Endgerät EG1 derart auszugestalten, dass von einem weiteren Endgerät EG bzw. das zweite Endgerät EG2, die für ihn gespeicherte Sprachnachricht spn abgerufen werden kann, unabhängig davon, ob der Teilnehmer TLN1 des ersten Endgeräts EG1 verfügbar ist. Dies bedeutet, der Sprachspeicher des ersten Endgeräts EG1 bzw. das erste Endgerät EG1 derart auszugestalten ist, dass ein Anruf von dem zweiten Endgerät EG2 zum Zwecke des Abrufs einer für das zweite Endgerät EG2 gespeicherten Sprachnachricht spn automatisch entgegengenommen wird und die Sprachnachricht spn automatisch aus dem Sprachspeicher ausgelesen und an das zweite Endgerät EG2 übermittelt wird.

## Patentansprüche

1. Verfahren zum Speichern von Sprachnachrichten in einem Kommunikationsnetz (ITR),
a) bei dem nach einer Eingabe des rufenden Teilnehmers (TLN1) eines ersten Endgeräts (EG1) von diesem zu einem temporär verfügbaren Sprachspeicher (SPS), der als Anrufbeantworter verwendet wird, eine Verbindung signalisiert und eine Sprachnachricht (spn) und zumindest eine ein zweites Endgerät (EG2) des gerufenen Teilnehmers identifizierende Abrufinformation (ai) übermittelt und dort gespeichert wird sowie anschließend die Verbindung beendet wird,
b) bei dem das zweite Endgerät (EG2) mit Hilfe der zumindest einen Abrufinformation (ai) über das Vorliegen einer abrufbaren Sprachnachricht (spn) im Sprachspeicher (SPS) informiert wird,
c) bei dem die Sprachnachricht (spn) von dem zweiten Endgerät (EG2) mit Hilfe der übermittelten Abrufinformation (ai) abrufbar ist oder vom Sprachspeicher (SPS) an das zweite Endgerät (EG2) übermittelt wird,
d) bei dem im Rahmen einer Verbindungssignalisierung oder einer bestehenden Verbindung von dem ersten Endgerät (EG1) zu dem zweiten Endgerät (EG2) durch das Kommunikationsnetz (ITR) festgestellt wird, dass dem zweiten Endgerät (EG2) kein Sprachspeicher (SPS) zugeordnet ist, und
e) bei dem anschließend entweder durch eine Eingabe (T) des rufenden Teilnehmers oder automatisch eine Verbindung zu dem temporär verfügbaren Sprachspeicher (SPS) signalisiert wird,
f) bei dem das zweite Endgerät (EG2) über das Kommunikationsnetz (ITR) oder der dem zweiten Endgerät (EG2) zugeordnete Teilnehmer (TLN2) über das Vorliegen der abrufbaren Sprachnachricht (spn) über andere Kommunikationsnetze (KN) informiert wird,
g) bei dem nach einem erfolgreichen Verbindungsaufbau zwischen dem Sprachspeicher (SPS) und dem zweiten Endgerät (EG2) mit Hilfe der zumindest einen Abrufinformation (ai) vom Sprachspeicher (SPS) zum zweiten Endgerät (EG2) die gespeicherte Sprachnachricht (spn) übermittelt wird, und
h) bei dem bei der Signalisierung der Verbindung durch das erste Endgerät (EG1) der temporär nutzbare Sprachspeicher (SPS) durch einen auf einem Speicherserver (SVS) angeordneten Pool von Sprachspeichern gebildet und mittels einer auf dem Speicherserver (SVS) ebenfalls angeordneten Sprachspeichersteuerung (SPST) ausgewählt wird, wobei der Sprachspeicher (SPS) durch einen Pool von einen vorgegebenen Speicherumfang aufweisenden Teilsprachspeichern gebildet wird,
- wobei einer zu speichernden Sprachnachricht (spn) in Abhängigkeit von dem Umfang der Sprachnachricht (spn) eine passende Anzahl von Teilsprachspeichern zugeordnet wird, oder
- der Sprachspeicher (SPS) durch einen Sprachspeicher mit einem großen Speicherumfang realisiert wird, wobei einer zu speichernden Sprachnachricht (spn) jeweils der erforderliche Teilspeicherumfang aus dem Sprachspeicher (SPS) zugeordnet wird,
wodurch eine dynamische temporäre Bereitstellung eines beliebigen, jedoch adressierbaren Sprachspeichers (SPS) im Kommunikationsnetz erfolgt.

2. Verfahren nach Anspruch 1, **dadurch gekennzeichnet, dass** durch das erste Endgerät (EG1) die Signalisierung der Verbindung zum temporär nutzbaren Sprachspeicher (SPS)
- im Rufzustand mit dem zweiten Endgerät (EG2), oder
- im Rufzustand mit dem zweiten Endgerät (EG2) mit einem Hinweis, dass dem zweiten Endgerät (EG2) kein Sprachspeicher zugeordnet ist, oder
- im Besetztzustand des zweiten Endgeräts (EG2), oder
- im Gesprächszustand mit dem zweiten Endgerät (EG2), oder
- im verbindungslosen Zustand des ersten Endgeräts (EG1) eingeleitet werden kann.

3. Verfahren nach einem der vorhergehenden Ansprüche, **dadurch gekennzeichnet, dass** die Abrufinformation (ai)
- bei einem zeitschlitzorientierten Kommunikationsnetz durch eine Rufnummer,
- bei einem paketorientierten Kommunikationsnetz durch eine Kommunikationsnetzadresse, wie z. B. Internetadresse, Intranetadresse oder E-Mail-Adresse oder eine SIP URI-Adresse oder eine Telefon URI-Adresse, oder
- bei einem Mobilfunk-Kommunikationsnetz durch eine Mobilfunk-Rufnummer
repräsentiert ist.

4. Verfahren nach einem der vorhergehenden Ansprüche, **dadurch gekennzeichnet,**
**dass** ein Endgerät des Teilnehmers (TLN2) des zweiten Endgeräts (EG2) von dem Sprachspeicher (SPS) aus mit Hilfe der gespeicherten Abrufinformation (ai)
- über ein paketorientiertes Netz durch eine E-Mail Nachricht oder eine Message Waiting-Nachricht, oder
- über ein Funkkommunikationsnetz durch eine SMS-Nachricht, über das Vorliegen einer gespeicherten Nachricht (spn) informiert wird, wobei der Sprachspeicher (SPS) für den Zugang in paketorientierte Netze, zeitschlitzorientierte und Funk- Kommunikationsnetze (KN) ausgestaltet ist.

5. Verfahren nach einem der vorhergehenden Ansprüche, **dadurch gekennzeichnet,**
**dass** an das zweite Endgerät (EG2) oder an den dem zweiten Endgerät (EG2) zugeordneten Teilnehmer (TLN2) die Abrufinformation (ai) über das Vorliegen einer abrufbaren Sprachnachricht übermittelt wird, wobei in der Abrufinformation (ai) eine netzspezifische Adresse (a2, svs) und/oder eine Rufnummer sowie eine nachrichtenspezifische Identifikation und/oder eine Authentisierungsinformation (auti) für einen Abruf der gespeicherten Sprachnachricht (spn) aus dem Sprachspeicher (SPS) über ein Kommunikationsnetz (ITR,KN) angegeben ist.

6. Verfahren nach einem der vorhergehenden Ansprüche, **dadurch gekennzeichnet,**
**dass** mit Hilfe des Sprachspeichers (SPS) die Sprachnachricht (spn) in eine Textnachricht umgewandelt und diese
- über ein Funknetz durch eine SMS-Nachricht, oder
- über ein paketorientiertes Kommunikationsnetz durch eine E-Mail-Nachricht
an den Teilnehmer (TLN2) des zweiten Endgeräts (EG2) übermittelt wird.

7. Verfahren nach einem der vorhergehenden Ansprüche, **dadurch gekennzeichnet,**
**dass** die Eingabe des Teilnehmers (TLN1) des ersten Endgeräts (EG1) durch Betätigen einer Sprachspeichertaste (T) oder durch Eingabe einer Prefixinformation oder einer netzspezifischen Adresse oder durch eine Auswahl in einem angezeigten Menü erfolgt.

8. Verfahren nach einem der vorhergehenden Ansprüche, **dadurch gekennzeichnet,**
**dass** die Signalisierung einer Verbindung durch den Verbindungsaufbau in einem Kommunikationsnetz und/oder mit dem Aufbau einer Session repräsentiert ist.

9. Kommunikationsnetz (ITR) mit Endgeräten (EG1, EG2, EG) zum Speichern von Sprachnachrichten (spn) in einem Speicherserver (SVS),
a) bei dem nach einer Eingabe des rufenden Teilnehmers (TLN1) eines ersten Endgeräts (EG1) von diesem zu einem temporär verfügbaren Sprachspeicher (SPS), der als Anrufbeantworter verwendet wird, eine Verbindung signalisiert und eine Sprachnachricht (spn) und zumindest eine ein zweites Endgerät (EG2) des gerufenen Teilnehmers identifizierende Abrufinformation (ai) übermittelt und dort gespeichert wird sowie anschließend die Verbindung beendet wird,
b) bei dem das zweite Endgerät (EG2) mit Hilfe der zumindest einen Abrufinformation (ai) über das Vorliegen einer abrufbaren Sprachnachricht (spn) im Sprachspeicher (SPS) informiert wird,
c) bei dem die Sprachnachricht (spn) von dem zweiten Endgerät (EG2) mit Hilfe der übermittelten Abrufinformation (ai) abrufbar ist oder vom Sprachspeicher (SPS) an das zweite Endgerät (EG2) übermittelt wird,
d) bei dem im Rahmen einer Verbindungssignalisierung oder einer bestehenden Verbindung von dem ersten Endgerät (EG1) zu dem zweiten Endgerät (EG2) durch das Kommunikationsnetz (ITR) festgestellt wird, dass dem zweiten Endgerät (EG2) kein Sprachspeicher (SPS) zugeordnet ist, und
e) bei dem anschließend entweder durch eine Eingabe des rufenden Teilnehmers oder automatisch eine Verbindung zu dem temporär verfügbaren Sprachspeicher (SPS) signalisiert wird,
f) bei dem das zweite Endgerät (EG2) über das Kommunikationsnetz (ITR) oder der dem zweiten Endgerät (EG2) zugeordnete Teilnehmer (TLN2) über das Vorliegen der abrufbaren Sprachnachricht (spn) über andere Kommunikationsnetze (KN) informiert wird,
g) bei dem nach einem erfolgreichen Verbindungsaufbau zwischen dem Sprachspeicher (SPS) und dem zweiten Endgerät (EG2) mit Hilfe der zumindest einen Abrufinformation (ai) vom Sprachspeicher (SPS) zum zweiten Endgerät (EG2) die gespeicherte Sprachnachricht (spn) übermittelt wird, und
h) bei dem bei der Signalisierung der Verbindung durch das erste Endgerät (EG1) der temporär nutzbare Sprachspeicher (SPS) durch einen auf dem Speicherserver (SVS) angeordneten Pool von Sprachspeichern gebildet und mittels einer auf dem Speicherserver (SVS) ebenfalls angeordneten Sprachspeichersteuerung (SPST) ausgewählt wird, wobei der Sprachspeicher (SPS) durch einen Pool von einen vorgegebenen Speicherumfang aufweisenden Teilsprachspeichern gebildet wird,
- wobei einer zu speichernden Sprachnachricht (spn) in Abhängigkeit von dem Umfang der Sprachnachricht (spn) eine passende Anzahl von Teilsprachspeichern zugeordnet wird, oder
- der Sprachspeicher (SPS) durch einen Sprachspeicher mit einem großen Speicherumfang realisiert wird, wobei einer zu speichernden Sprachnachricht (spn) jeweils der erforderliche Teilspeicherumfang aus dem Sprachspeicher (SPS) zugeordnet wird,
wodurch eine dynamische temporäre Bereitstellung eines beliebigen, jedoch adressierbaren Sprachspeichers (SPS) im Kommunikationsnetz erfolgt.

10. Verfahren nach einem der Ansprüche 1 bis 8 bzw. Kommunikationsnetz (ITR) nach Anspruch 9, **dadurch gekennzeichnet, dass** bei dem Kommunikationsnetz (ITR) mit SIP-Protokoll (SIP), einschließlich von SIP Extension Protokollen, die das SIP-Protokoll um weitere Mechanismen ergänzen, oder mit H.323-Protokoll zusätzlich ein SIP-Server (SIPSER) oder ein H.323-Server für die Verbindungssteuerung zwischen den Endgeräten (EG, EG1, EG2) und dem Sprachspeicher (SPS) vorgesehen ist.

11. Verwendung eines Endgerätes für das Speichern von Sprachnachrichten (spn) in einem Kommunikationsnetz nach dem Verfahren nach Anspruch 1 und gegebenenfalls nach einem der Ansprüche 2 bis 8,
a) mit einer Verbindungssteuerung (TCP/IP-PS) zur Verbindungssignalisierung vom Endgerät (EG1) eines rufenden Teilnehmers zu einem temporär nutzbaren Sprachspeicher (SPS) sowie zur Übermittlung einer Sprachnachricht (spn) und zumindest einer ein zweites Endgerät des gerufenen Teilnehmers identifizierenden Abrufinformation (ai) zum Sprachspeicher (SPS) sowie zum Beenden der Verbindung nach der Speicherung der Sprachnachricht (spn) im Sprachspeicher (SPS),
b) wobei das zweite Endgerät (EG2) mit Hilfe der zumindest einen Abrufinformation (ai) über das Vorliegen einer abrufbaren Sprachnachricht (spn) im Sprachspeicher (SPS) informiert wird, und
c) die Sprachnachricht (spn) von dem zweiten Endgerät (EG2) mit Hilfe der übermittelten Abrufinformation (ai) abrufbar ist oder vom Sprachspeicher (SPS) an das zweite Endgerät (EG2) übermittelt wird,
d) wobei die Verbindungssteuerung (TCP/IP-PS) derart ausgestaltet ist, dass im Rahmen der Verbindungssignalisierung von einem ersten Endgerät (EG1) zu einem zweiten Endgerät (EG2) festgestellt wird, dass dem zweiten Endgerät kein Sprachspeicher zugeordnet ist, und
e) dass anschließend entweder durch eine Eingabe des rufenden Teilnehmers oder automatisch eine Verbindung zu einem temporär verfügbaren Sprachspeicher (SPS) signalisiert wird.

12. Verwendung eines Sprachspeichers (SPS) zum Speichern von Sprachnachrichten (spn) in einem Kommunikationsnetz nach dem Verfahren nach Anspruch 1 und gegebenenfalls nach einem der Ansprüche 2 bis 8,
mit einer Verbindungssteuerung(TCP/IP-PS) und Speichersteuerung (SPST)
a) zur Verbindungssignalisierung vom ersten Endgerät (EG1) des rufenden Teilnehmers zum temporär nutzbaren Sprachspeicher (SPS) und zum Empfang und Speichern einer Sprachnachricht (spn) und zumindest einer ein zweites Endgerät (EG2) des gerufenen Teilnehmers identifizierende Abrufinformation (ai) vom ersten Endgerät (EG1) sowie zum Beenden der Verbindung, und
b) zur Information des zweiten Endgeräts mit Hilfe der Abrufinformation (ai) über das Vorliegen einer abrufbaren Sprachnachricht (spn) über ein Kommunikationsnetz (ITR, KN) und zum Abrufen der Sprachnachricht (spn) durch das zweite Endgerät (EG2) mit Hilfe der übermittelten Abrufinformation (ai) oder zum Übermitteln der Sprachnachricht (spn) vom Sprachspeicher (SPS) an das zweite Endgerät (EG2).

13. Verwendung eines Sprachspeichers (SPS) nach Anspruch 12, **dadurch gekennzeichnet,**
**dass** die Verbindungssteuerung (TCP/IP-PS) derart ausgestaltet ist,
**dass** nach einem erfolgreichen Verbindungsaufbau zwischen dem Sprachspeicher (SPS) und dem zweiten Endgerät (EG2) mit Hilfe der zumindest einen Abrufinformation (ai) vom Sprachspeicher (SPS) zum zweiten Endgerät (EG2) die gespeicherte Sprachnachricht (spn) übermittelt wird,
**dass** die Verbindungssteuerung(TCP/IP-PS) und eine Netzanpassungseinheit (NA) derart ausgestaltet sind, dass der dem zweiten Endgerät (EG2) zugeordneten Teilnehmer (TLN2) über das Vorliegen einer abrufbaren Sprachnachricht über andere Kommunikationsnetze (KN) informiert wird.

14. Verwendung eines Sprachspeichers (SPS) nach Anspruch 13, **dadurch gekennzeichnet,**
**dass** die Verbindungssteuerung (TCP/IP-PS) und die Netzanpassungseinheit (NA) für den Zugang in paketorientierte Netze, zeitschlitzorientierte und Funk-Kommunikationsnetze derart ausgestaltet ist, dass ein Endgerät des Teilnehmers (TLN2) des zweiten Endgeräts (EG2) mit Hilfe der gespeicherten Abrufinformation (ai)
- über ein paketorientiertes Netz durch eine E-Mail-Nachricht oder eine Message Waiting-Nachricht, oder
- über ein Funkkommunikationsnetz durch eine SMS-Nachricht, über das Vorliegen einer gespeicherten Sprachnachricht (spn) informiert wird,
**dass** die Verbindungssteuerung (TCP/IP-PS) und Speichersteuerung (SPST) derart ausgestaltet ist, dass an das zweite Endgerät (EG2) oder an den dem zweiten Endgerät (EG2) zugeordneten Teilnehmer (TLN2) eine Abrufinformation (ai) über das Vorliegen einer abrufbaren Sprachnachricht (spn) übermittelt wird, wobei in der Abrufinformation (ai) eine netzspezifische Adresse (a2,svs) und/oder eine Rufnummer und/oder eine nachrichtenspezifische Identifikation und/oder eine Authentisierungsinformation (auti) für einen Abruf der gespeicherten Sprachinformation (spn) aus dem Sprachspeicher (SVS) über ein Kommunikationsnetz (ITR, KN) angegeben ist.

## Claims

1. Method for storing voice messages in a communication network (ITR)
a) in which, after an input of the calling subscriber (TLN1) of a first terminal (EG1), the latter signals a connection to a temporarily available voice mailbox (SPS), which is used as call responder, and transmits, and stores there, a voice message (spn) and at least one retrieval information item (ai) identifying a second terminal (EG2) of the called subscriber, and subsequently the terminates the connection,
b) in which the second terminal (EG2) is informed by means of the at least one retrieval information item (ai) concerning the presence of a retrievable voice message (spn) in the voice mailbox (SPS),
c) in which the voice message (spn) is retrievable by the second terminal (EG2) by means of the transmitted retrieval information (ai) or is transmitted from the voice mailbox (SPS) to the second terminal (EG2),
d) in which, in the context of a connection signaling or an existing connection from the first terminal (EG1) to the second terminal (EG2), it is established by the communication network (ITR) that no voice mailbox (SPS) is associated with the second terminal (EG2), and
e) in which, subsequently, by an input (T) of the calling subscriber or automatically, a connection is signaled to the temporarily available voice mailbox (SPS),
f) in which the second terminal (EG2) is informed via the communication network (ITR) or the subscriber (TLN2) associated with the second terminal (EG2) concerning the presence of the retrievable voice message (spn) via other communication networks (KN),
g) in which, after a successful connection setup between the voice mailbox (SPS) and the second terminal (EG2), by means of the at least one retrieval information item (ai), the stored voice message (spn) is transmitted from the voice mailbox (SPS) to the second terminal (EG2), and
h) in which, at the time of the signaling of the connection by the first terminal (EG1), the temporarily usable voice mailbox (SPS) is formed by a pool of voice mailboxes arranged on a storage server (SVS) and selected by means of a voice mailbox control (SPST) also arranged on the storage server (SVS), wherein the voice mailbox (SPS) is formed by a pool of partial voice mailboxes comprising a predetermined storage extent,
- wherein a suitable number of partial voice mailboxes depending on the extent of the voice message (spn) is associated with a voice message (spn) to be stored, or
- the voice mailbox (SPS) is realized by a voice mailbox with a large storage extent, wherein in each case the required partial storage extent from the voice mailbox (SPS) is associated with a voice message to be stored (spn),
whereby a dynamic temporary provision of any desired but addressable voice mailbox (SPS) occurs in the communication network.

2. Method according to Claim 1, **characterized in that**, by means of the first terminal (EG1), the signaling of the connection to the temporarily usable voice mailbox (SPS) can be instituted
- in the ringing state with the second terminal (EG2), or
- in the ringing state with the second terminal (EG2) with an indication that no voice mailbox is associated with the second terminal (EG2), or
- in the occupied state of the second terminal (EG2), or
- in the conversation state with the second terminal (EG2), or
- in the connection-free state of the first terminal (EG1).

3. Method according to any one of the preceding claims, **characterized in that** the retrieval information (ai) is represented
- in the case of a time slot-oriented communication network by a call number,
- in the case of a packet-oriented communication network by a communication network address, such as, for example, Internet address, Intranet address or Email address or a SIP URI address or a telephone URI address, or
- in the case of a mobile phone communication network by a mobile phone call number.

4. Method according to any one of the preceding claims, **characterized in that**
a terminal of the subscriber (TLN2) of the second terminal (EG2) is informed by the voice mailbox (SPS) by means of the stored retrieval information (ai)
- via a packet-oriented network by means of an Email message or a message-waiting message, or
- via a wireless communication network by means of an SMS message, concerning the presence of a stored message (spn), wherein the voice mailbox (SPS) is configured for access in packet-oriented networks, time slot-oriented networks and wireless communication networks (KN).

5. Method according to any one of the preceding claims, **characterized in that**
the retrieval information (ai) concerning the presence of a retrievable voice message is transmitted to the second terminal (EG2) or to the subscriber (TLN2) associated with the second terminal (EG2), wherein, in the retrieval information (ai), a network-specific address (a2, svs) and/or a call number as well as a message-specific identification and/or authentication information (auti) is/are issued for a retrieval of the stored voice message (spn) from the voice mailbox (SPS) via a communication network (ITR, KN).

6. Method according to any one of the preceding claims, **characterized in that**
by means of the voice mailbox (SPS), the voice message (spn) is converted into a text message, and said text message is transmitted
- via a wireless network by means of an SMS message, or
- via a packet-oriented communication network by means of an Email message to the subscriber (TLN2) of the second terminal (EG2).

7. Method according to any one of the preceding claims, **characterized in that**
the input of the subscriber (TLN1) of the first terminal (EG1) occurs by actuating a voice mailbox key (T) or by the input of prefix information or a network-specific address or by a selection in a displayed menu.

8. Method according to any one of the preceding claims, **characterized in that**
the signaling of a connection is represented by the connection setup in a communication network and/or with the setup of a session.

9. Communication network (ITR) with terminals (EG1, EG2, EG) for storing voice messages (spn) in a storage server (SVS),
a) in which, after an input of the calling subscriber (TLN1) of a first terminal (EG1), the latter signals a connection to a temporarily available voice mailbox (SPS), which is used as call responder, and transmits, and stores there, a voice message (spn) and at least one retrieval information item (ai) identifying a second terminal (EG2) of the called subscriber, and subsequently the terminates the connection,
b) in which the second terminal (EG2) is informed by means of the at least one retrieval information item (ai) concerning the presence of a retrievable voice message (spn) in the voice mailbox (SPS),
c) in which the voice message (spn) is retrievable by the second terminal (EG2) by means of the transmitted retrieval information (ai) or is transmitted from the voice mailbox (SPS) to the second terminal (EG2),
d) in which, in the context of a connection signaling or an existing connection from the first terminal (EG1) to the second terminal (EG2), it is established by the communication network (ITR) that no voice mailbox (SPS) is associated with the second terminal (EG2), and
e) in which, subsequently, by an input of the calling subscriber or automatically, a connection is signaled to the temporarily available voice mailbox (SPS),
f) in which the second terminal (EG2) is informed via the communication network (ITR) or the subscriber (TLN2) associated with the second terminal (EG2) concerning the presence of the retrievable voice message (spn) via other communication networks (KN),
g) in which, after a successful connection setup between the voice mailbox (SPS) and the second terminal (EG2), by means of the at least one retrieval information item (ai), the stored voice message (spn) is transmitted from the voice mailbox (SPS) to the second terminal (EG2), and
h) in which, at the time of the signaling of the connection by the first terminal (EG1), the temporarily usable voice mailbox (SPS) is formed by a pool of voice mailboxes arranged on a storage server (SVS) and selected by means of a voice mailbox control (SPST) also arranged on the storage server (SVS), wherein the voice mailbox (SPS) is formed by a pool of partial voice mailboxes comprising a predetermined storage extent,
- wherein a suitable number of partial voice mailboxes depending on the extent of the voice message (spn) is associated with a voice message (spn) to be stored, or
- the voice mailbox (SPS) is realized by a voice mailbox with a large storage extent, wherein in each case the required partial storage extent from the voice mailbox (SPS) is associated with a voice message to be stored (spn),
whereby a dynamic temporary provision of any desired but addressable voice mailbox (SPS) occurs in the communication network.

10. Method according to any one of Claims 1 to 8 and respectively communication network (ITR) according to Claim 9, **characterized in that**, in the communication network (ITR) with SIP protocol (SIP), including SIP extension protocols which supplement the SIP protocol by further mechanisms, or with H.323 protocol, a SIP server (SIPSER) or an H.323 server for the connection control between the terminals (EG, EG1, EG2) and the voice mailbox (SPS) is provided in addition.

11. Use of a terminal for storing voice messages (spn) in a communication network in accordance with the method according to Claim 1 and optionally according to any one of Claims 2 to 8,
a) with a connection control (TCP/IP-PS) for connection signaling from the terminal (EG1) of a calling subscriber to a temporarily usable voice mailbox (SPS) as well as for transmitting a voice message (spn) and at least one retrieval information item (ai) identifying a second terminal of the called subscriber to the voice mailbox (SPS) as well as for terminating the connection after the storage of the voice message (spn) in the voice mailbox (SPS),
b) wherein the second terminal (EG2) is informed by means of the at least one retrieval information (ai) concerning the presence of a retrievable voice message (spn) in the voice mailbox (SPS), and
c) the voice message (spn) from the second terminal (EG2) is retrievable by means of the transmitted retrieval information (ai) or is transmitted from the voice mailbox (SPS) to the second terminal (EG2),
d) wherein the connection control (TCP/IP-PS) is configured in such a manner that, in the context of the connection signaling from a first terminal (EG1) to a second terminal (EG2), it is determined that no voice mailbox is associated with the second terminal, and
e) that, subsequently, by an input of the calling subscriber or automatically, a connection to a temporarily available voice mailbox (SPS) is signaled.

12. Use of a voice mailbox (SPS) for storing voice messages (spn) in a communication network in accordance with the method according to Claim 1 and optionally according to any one of Claims 2 to 8,
with a connection control (TCP/IP-PS) and a storage control (SPST)
a) for the connection signaling from the first terminal (EG1) of the calling subscriber to the temporarily usable voice mailbox (SPS) and for the reception and storage of a voice message (spn) and of at least one retrieval information item (ai) from the first terminal (EG1), identifying a second terminal (EG2) of the called subscriber, as well as for the termination of the connection, and
b) for informing the second terminal by means of the retrieval information (ai) concerning the presence of a retrievable voice message (spn) via a communication network (ITR, KN), and for retrieving the voice message (spn) by the second terminal (EG2) by means of the transmitted retrieval information (ai) or for transmitting the voice message (spn) from the voice mailbox (SPS) to the second terminal (EG2).

13. Use of a voice mailbox (SPS) according to Claim 12, **characterized in**
**that** the connection control (TCP/IP-PS) is designed so
**that**, after a successful connection setup between the voice mailbox (SPS) and the second terminal (EG2), by means of the at least one retrieval information item (ai), the stored voice message (spn) is transmitted from the voice mailbox (SPS) to the second terminal (EG2),
**that** the connection control (TCP/IP-PS) and a network adaptation unit (NA) are configured so that the subscriber (TLN2) associated with the second terminal (EG2) is informed concerning the presence of a retrievable voice message via other communication networks (KN).

14. Use of a voice mailbox (SPS) according to Claim 13, **characterized in**
**that** the connection control (TCP/IP-PS) and the network adaptation unit (NA) are configured for access in packet-oriented networks, time slot-oriented networks and wireless communication networks in such a manner that a terminal of the subscriber (TLN2) of the second terminal (EG2) is informed by means of the stored retrieval information (ai)
- via a packet-oriented network by an Email message or a message-waiting message, or
- via a wireless communication network by an SMS message concerning the presence of a stored voice message (spn),
**that** the communication control (TCP/IP-PS) and storage control (SPST) are configured so that retrieval information (ai) concerning the presence of a retrievable voice message (spn) is transmitted to the second terminal (EG2) or to the subscriber (TLN2) associated with the second terminal (EG2), wherein, in the retrieval information (ai), a network-specific address (a2, svs) and/or a call number and/or a message-specific identification and/or authentication information item (auti) for a retrieval of the stored voice information (spn) from the voice mailbox (SVS) via a communication network (ITR, KN) is indicated.

## Revendications

1. Procédé pour la mémorisation de messages vocaux dans un réseau de communication (ITR),
a) pour lequel après une saisie de l'usager appelant (TLN1) d'un premier terminal (EG1), une liaison est signalée entre celui-ci et une mémoire vocale (SPS) temporairement disponible qui est utilisée comme répondeur, et un message vocal (spn) et au moins une information d'appel (ai) identifiant un second terminal (EG2) de l'usager appelé sont transmis et y sont enregistrés puis la liaison est terminée,
b) pour lequel le second terminal (EG2) est informé à l'aide de l'au moins une information d'appel (ai) de l'existence d'un message vocal pouvant être appelé (spn) dans la mémoire vocale (SPS),
c) pour lequel le message vocal (spn) peut être appelé par le second terminal (EG2) à l'aide de l'information d'appel transmise (ai) ou est transmis par la mémoire vocale (SPS) au second terminal (EG2),
d) pour lequel dans le cadre d'une signalisation de liaison ou d'une liaison existante entre le premier terminal (EG1) et le second terminal (EG2), il est constaté par le réseau de communication (ITR) qu'aucune mémoire vocale (SPS) n'est associée au second terminal (EG2), et
e) pour lequel une liaison avec la mémoire vocale (SPS) temporairement disponible est ensuite signalée par une saisie (T) de l'usager appelant ou automatiquement,
f) pour lequel le second terminal (EG2) est informé par le réseau de communication (ITR) ou l'usager (TLN2) associé au second terminal (EG2) est informé de l'existence du message vocal pouvant être appelé (spn) par d'autres réseaux de communication (KN),
g) pour lequel après un établissement de liaison réussi entre la mémoire vocale (SPS) et le second terminal (EG2) à l'aide de l'au moins une information d'appel (ai), le message vocal (spn) enregistré est transmis de la mémoire vocale (SPS) au second terminal (EG2), et
h) pour lequel lors de la signalisation de la liaison par le premier terminal (EG1), la mémoire vocale (SPS) temporairement utilisable est formée par un groupe de mémoires vocales agencé sur un serveur de stockage (SVS) et est sélectionnée à l'aide d'une commande de mémoire vocale (SPST) agencée aussi sur le serveur de stockage (SVS), la mémoire vocale (SPS) étant formée par un groupe de mémoires vocales partielles présentant une quantité de mémoire prescrite,
- un nombre adapté de mémoires vocales partielles étant associé à un message vocal (spn) à enregistrer en fonction de la quantité du message vocal (spn), ou
- la mémoire vocale (SPS) étant réalisée par une mémoire vocale avec une grande quantité de mémoire, la quantité de mémoire partielle nécessaire de la mémoire vocale (SPS) étant associée respectivement à un message vocal (spn) à enregistrer, par quoi une mise à disposition temporaire dynamique d'une mémoire vocale (SPS) quelconque, toutefois adressable est réalisée dans le réseau de communication.

2. Procédé selon la revendication 1, **caractérisé en ce que** la signalisation de la liaison à la mémoire vocale (SPS) temporairement utilisable peut être amorcée par le premier terminal (EG1)
- dans l'état d'appel avec le second terminal (EG2) ou
- dans l'état d'appel avec le second terminal (EG2) avec une indication selon laquelle aucune mémoire vocale n'est associée au second terminal (EG2) ou
- dans l'état d'occupation du second terminal (EG2) ou
- dans l'état de conversation avec le second terminal (EG2) ou
- dans l'état sans liaison du premier terminal (EG1).

3. Procédé selon l'une quelconque des revendications précédentes, **caractérisé en ce que** l'information d'appel (ai) est représentée
- pour un réseau de communication orienté sur les intervalles temporels par un numéro d'appel,
- pour un réseau de communication orienté sur les paquets par une adresse de réseau de communication telle que l'adresse Internet, l'adresse Intranet ou l'adresse e-mail ou une adresse URI SIP ou une adresse URI du téléphone ou
- pour un réseau de communication de téléphonie mobile par un numéro de téléphone mobile.

4. Procédé selon l'une quelconque des revendications précédentes, **caractérisé en ce que**
un terminal de l'usager (TLN2) du second terminal (EG2) est informé par la mémoire vocale (SPS) à l'aide de l'information d'appel (ai) enregistrée
- par un réseau orienté sur les paquets par un message e-mail ou un message de message d'attente ou
- par un réseau de communication radio par un message SMS, de l'existence d'un message enregistré (spn), la mémoire vocale (SPS) étant configurée pour l'accès dans des réseaux orientés sur les paquets, réseaux de communication orientés sur les intervalles temporels et radio (KN).

5. Procédé selon l'une quelconque des revendications précédentes, **caractérisé en ce que**
l'information d'appel (ai) sur l'existence d'un message vocal pouvant être appelé est transmise au second terminal (EG2) ou à l'usager (TLN2) associé au second terminal (EG2), une adresse (a2, svs) spécifique au réseau et/ou un numéro d'appel ainsi qu'une identification spécifique au message et/ou une information d'authentification (auti) pour un appel du message vocal (spn) enregistré de la mémoire vocale (SPS) étant indiquée par un réseau de communication (ITR, KN) dans l'information d'appel (ai).

6. Procédé selon l'une quelconque des revendications précédentes, **caractérisé en ce que**
le message vocal (spn) est converti en un message textuel à l'aide de la mémoire vocale (SPS) et celui-ci est transmis
- par un réseau radio au moyen d'un message SMS ou
- par un réseau de communication orienté sur les paquets au moyen d'un message e-mail
à l'usager (TLN2) du second terminal (EG2).

7. Procédé selon l'une quelconque des revendications précédentes, **caractérisé en ce que**
la saisie de l'usager (TLN1) du premier terminal (EG1) est effectuée par actionnement d'une touche de mémoire vocale (T) ou par saisie d'une information de préfixe ou d'une adresse spécifique au réseau ou par une sélection dans un menu affiché.

8. Procédé selon l'une quelconque des revendications précédentes, **caractérisé en ce que**
la signalisation d'une liaison est représentée par l'établissement de liaison dans un réseau de communication et/ou avec l'établissement d'une session.

9. Réseau de communication (ITR) avec des terminaux (EG1, EG2, EG) pour la mémorisation de messages vocaux (spn) dans un serveur de stockage (SVS),
a) pour lequel après une saisie de l'usager appelant (TLN1) d'un premier terminal (EG1), une liaison est signalée entre celui-ci et une mémoire vocale (SPS) temporairement disponible qui est utilisée comme répondeur et un message vocal (spn) et au moins une information d'appel (ai) identifiant un second terminal (EG2) de l'usager appelé sont transmis et y sont enregistrés puis la liaison est terminée,
b) pour lequel le second terminal (EG2) est informé à l'aide de l'au moins une information d'appel (ai) de l'existence d'un message vocal pouvant être appelé (spn) dans la mémoire vocale (SPS),
c) pour lequel le message vocal (spn) peut être appelé par le second terminal (EG2) à l'aide de l'information d'appel transmise (ai) ou est transmis par la mémoire vocale (SPS) au second terminal (EG2),
d) pour lequel dans le cadre d'une signalisation de liaison ou d'une liaison existante entre le premier terminal (EG1) et le second terminal (EG2), il est constaté par le réseau de communication (ITR) qu'aucune mémoire vocale (SPS) n'est associée au second terminal (EG2), et
e) pour lequel une liaison avec la mémoire vocale (SPS) temporairement disponible est ensuite signalée par une saisie (T) de l'usager appelant ou automatiquement,
f) pour lequel le second terminal (EG2) est informé par le réseau de communication (ITR) ou l'usager (TLN2) associé au second terminal (EG2) est informé de l'existence du message vocal pouvant être appelé (spn) par d'autres réseaux de communication (KN),
g) pour lequel après un établissement de liaison réussi entre la mémoire vocale (SPS) et le second terminal (EG2) à l'aide de l'au moins une information d'appel (ai), le message vocal (spn) enregistré est transmis de la mémoire vocale (SPS) au second terminal (EG2), et
h) pour lequel lors de la signalisation de la liaison par le premier terminal (EG1), la mémoire vocale (SPS) temporairement utilisable est formée par un groupe de mémoires vocales agencé sur le serveur de stockage (SVS) et est sélectionnée à l'aide d'une commande de mémoire vocale (SPST) agencée aussi sur le serveur de stockage (SVS), la mémoire vocale (SPS) étant formée par un groupe de mémoires vocales partielles présentant une quantité de mémoire prescrite,
- un nombre adapté de mémoires vocales partielles étant associé à un message vocal (spn) à enregistrer en fonction de la quantité du message vocal (spn), ou
- la mémoire vocale (SPS) étant réalisée par une mémoire vocale avec une grande quantité de mémoire, la quantité de mémoire partielle nécessaire de la mémoire vocale (SPS) étant associée respectivement à un message vocal (spn) à enregistrer, par quoi une mise à disposition temporaire dynamique d'une mémoire vocale (SPS) quelconque, toutefois adressable est réalisée dans le réseau de communication.

10. Procédé selon l'une quelconque des revendications 1 à 8 ou réseau de communication (ITR) selon la revendication 9, **caractérisé en ce que** pour le réseau de communication (ITR) avec protocole SIP (SIP), y compris protocoles d'extension SIP qui complètent le protocole SIP avec d'autres mécanismes, ou avec le protocole H.323, un serveur SIP (SISPSER) ou un serveur H.323 est prévu pour la commande de liaison entre les terminaux (EG, EG1, EG2) et la mémoire vocale (SPS).

11. Utilisation d'un terminal pour la mémorisation de messages vocaux (spn) dans un réseau de communication selon le procédé selon la revendication 1 et éventuellement selon l'une quelconque des revendications 2 à 8,
a) avec une commande de liaison (TCP/IP-IS) pour la signalisation de liaison entre le terminal (EG1) d'un usager appelant et une mémoire vocale (SPS) temporairement utilisable ainsi que pour la transmission d'un message vocal (spn) et au moins d'une information d'appel (ai) identifiant un second terminal de l'usager appelé à la mémoire vocale (SPS) ainsi que pour terminer la liaison après la mémorisation du message vocal (spn) dans la mémoire vocale (SPS),
b) le second terminal (EG2) étant informé à l'aide de l'au moins une information d'appel (ai) de l'existence d'un message vocal (spn) pouvant être appelé dans la mémoire vocale (SPS), et
c) le message vocal (spn) pouvant être appelé par le second terminal (EG2) à l'aide de l'information d'appel transmise (ai) ou étant transmis par la mémoire vocale (SPS) au second terminal (EG2),
d) la commande de liaison (TCP/IP-PS) étant configurée de telle manière que dans le cadre de la signalisation de liaison entre un premier terminal (EG1) et un second terminal (EG2), il est constaté qu'aucune mémoire vocale n'est associée au second terminal, et
e) une liaison à une mémoire vocale (SPS) temporairement disponible est ensuite signalée par une saisie de l'usager appelant ou automatiquement.

12. Utilisation d'une mémoire vocale (SPS) pour la mémorisation de messages vocaux (spn) dans un réseau de communication selon le procédé selon la revendication 1 et éventuellement selon l'une quelconque des revendications 2 à 8, avec une commande de liaison (TCP/IP-IS) et une commande de mémoire (SPST)
a) pour la signalisation de liaison entre le premier terminal (EG1) de l'usager appelant et la mémoire vocale (SPS) temporairement utilisable et pour la réception et la mémorisation d'un message vocal (spn) et au moins d'une information d'appel (ai) identifiant un second terminal (EG2) de l'usager appelé par le premier terminal (EG1) ainsi que pour terminer la liaison, et
b) pour informer le second terminal à l'aide de l'information d'appel (ai) de l'existence d'un message vocal (spn) pouvant être appelé par un réseau de communication (ITR, KN) et pour appeler le message vocal (spn) par le second terminal (EG2) à l'aide de l'information d'appel (ai) transmise ou pour transmettre le message vocal (spn) de la mémoire vocale (SPS) au second terminal (EG2).

13. Utilisation d'une mémoire vocale (SPS) selon la revendication 12, **caractérisée en ce que**
la commande de liaison (TCP/IP-PS) est configurée de telle manière qu'après un établissement de liaison réussi entre la mémoire vocale (SPS) et le second terminal (EG2) à l'aide de l'au moins une information d'appel (ai), le message vocal (spn) enregistré est transmis de la mémoire vocale (SPS) au second terminal (EG2),
la commande de liaison (TCP/IP-PS) et une unité d'adaptation au réseau (NA) sont configurées de telle manière que l'usager (TLN2) associé au second terminal (EG2) soit informé de l'existence d'un message vocal pouvant être appelé par d'autres réseaux de communication (KN).

14. Utilisation d'une mémoire vocale (SPS) selon la revendication 13, **caractérisée en ce que**
la commande de liaison (TCP/IP-PS) et l'unité d'adaptation de réseau (NA) sont configurées pour l'accès dans des réseaux orientés sur les paquets, des réseaux de communication orientés sur des intervalles temporels et radio de telle manière qu'un terminal de l'usager (TLN2) du second terminal (EG2) soit informé à l'aide de l'information d'appel enregistrée (ai)
- par un réseau orienté sur les paquets au moyen d'un message e-mail ou un message de message d'attente ou
- par un réseau de communication radio au moyen d'un message SMS de l'existence d'un message vocal enregistré (spn),
la commande de liaison (TCP/IP-PS) et la commande de mémoire (SPST) sont configurées de telle manière qu'une information d'appel (ai) sur l'existence d'un message vocal (spn) pouvant être appelé est transmise au second terminal (EG2) ou à l'usager (TLN2) associé au second terminal (EG2), une adresse (a2, svs) spécifique au réseau et/ou un numéro d'appel et/ou une identification spécifique au message et/ou une information d'authentification (auti) étant indiquée dans l'information d'appel (ai) pour un appel de l'information vocale enregistrée (spn) de la mémoire vocale (SVS) par un réseau de communication (ITR, KN).
